# EUROPEAN PATENT SPECIFICATION

(11) **EP 3 221 941 B1**
(45) Date of publication and mention of the grant of the patent: **24.10.2018**
(21) Application number: 15818040.6
(22) Date of filing: 16.11.2015
(51) Int. Cl.: H02G 5/00, H02G 5/10

(54) **CONDUCTIVE PLATE PARTICULARLY OF A JUNCTION BLOCK OF BUSBARS AND JUNCTION BLOCK COMPRISING SAID CONDUCTIVE PLATE**
LEITENDE PLATTE VON EINEM SAMMELSCHIENENVERBINDUNGSBLOCK UND VERBINDUNGSBLOCK MIT SO EINER PLATTE
PLAQUE CONDUCTRICE POUR BLOC DE JONCTION DE JEU DE BARRES ET BLOC DE JONCTION COMPRENANT UNE TELLE PLAQUE.

(30) Priority: 17.11.2014 IT BS20140191
(43) Date of publication of application: 27.09.2017
(73) Proprietor: DKC Power Solutions S.r.l., 00144 Roma (IT)
(72) Inventor: REGOSA, Mattia, 25133 Brescia (IT)
(74) Representative: Galassi, Alessandro
(86) International application number: PCT/IB2015/058848
(87) International publication number: WO 2016/079655

(56) References cited:
- CN-U- 203 398 677
- CN-U- 203 445 560
- CN-U- 203 871 491
- US-A- 2 097 324
- US-A- 4 627 680
- US-A- 4 842 533

## Description

### Technical field

In its most general aspect, the present invention refers to the sector of prefabricated electrical conduits, and it particularly concerns a conductive plate for a junction block of the type used in electrically connecting busbars.

The invention also concerns a junction block for busbars and comprising a conductive plate of the above-mentioned type.

### State of the art

As is known, in the field of prefabricated electrical conduits, the formation of an unbroken electrical path along a desired path is realized through the connection of a number of conductive elements, which are also known as busbars, and which comprise conductor bars that extend within a casing. In particular, the busbars are consecutively joined to each other by means of electrical junction blocks, also known as monoblocs, that comprise conductive copper plates interposed between the conductor bars of two contiguous busbars, and that are mechanically clamped in a pack by means of a clamping bolt that passes transversely in the junction block and ensures close contact between the conductor bars of the busbars and the conductive plates of the respective junction box. Examples of conductive plates for junction blocks for busbars are described in patent documents CN 203871491 U, CN 203445560U, CN 203398677U and US 4842533A. In these documents, the conductive plates are obtained by shaping and working flat plates or sheets of copper so as to realize central portions that are not aligned with respect to the lateral portions and that are intended for coming into contact with adjacent plates so that the lateral portions are wider apart and allow for insertion of the conductive plates to be connected.

Although they have advantages, junction blocks of the above-mentioned type are not without drawbacks, and in particular they are subject to high overheating of the copper plates and limited maximum short-circuit current levels.

Other examples of junction blocks for busbars are known.

Document US4627680 A describes a busway joint construction for electrically connecting and disconnecting busway sections of busbars, characterized by a detachable joint assembly having pairs of plates extending between longitudinally spaced bus bars; one plate being an electrical conductor; the other plate being a non-conductor and having integral transversely extending spacers for maintaining the conductor plates of adjacent bus bars in spaced relation to facilitate insertion of the joint assembly; and the spacers including support surfaces for the electrical conductor.

The above-mentioned drawbacks are caused, or, in any case, aggravated by the fact that the central portion of each conductive plate of a junction block necessarily has a hole passing through it for the above-mentioned clamping bolt, a hole which in fact constitutes a lack of conductive material precisely in the portion of the copper plate that most contributes to realizing the bridge for the electrical connection between two consecutive busbars.

The hole in each copper plate, which basically takes on the form of an actual through channel in the junction block, determines structural weakening of the copper plates and thus of the overall junction block, and also negatively influences the flow of current passing through the copper plates, in particular altering the flow lines thereof in an undesirable manner, with increased overheating of the conductive plates in the portion around the hole, greater dissipation of heat and lower yield in terms of the transmission of electric power, in addition to a greater risk of short circuits and high electrodynamic stress.

### Summary of the invention

The technical problem on which the present invention is based is that of making available a junction block of the type comprising a plurality of conductive plates for electrically connecting busbars, and having structural and functional characteristics that are such as to overcome the drawbacks cited hereinabove with reference to the prior art, and in particular a junction block of the above-mentioned type that is capable of providing a connection between two consecutive busbars that is more efficient and electrically safer and structurally more solid, minimizing in particular the overheating of the conductive plates, the risk of short circuits, electrodynamic stress and bending of the conductive plates.

In accordance with the invention, the above-mentioned problem is resolved by a conductive plate for a junction block for busbars that has a pair of faces opposite each other and at least one through hole extending between the above-mentioned faces in a preferably central position thereon, and that is characterized in that on one of the above-mentioned faces, it comprises a protruding portion, that is to say, a projecting portion, through which the above-mentioned at least one hole passes. The above-mentioned protruding portion is a band or strip fashioned integrally in the above-mentioned conductive plate, the strip being a median strip that extends from one edge of the conductive plate to an opposite edge of the conductive plate.

The width of the above-mentioned protruding portion is preferably greater than the above-mentioned at least one hole. At the above-mentioned protruding portion, the thickness of the above-mentioned conductive plate is preferably about twice the thickness of the remaining portion of the conductive plate.

The above-mentioned conductive plate is preferably made of copper or aluminium or of a copper alloy or aluminium alloy.

The above-mentioned conductive plate preferably comprises beveled edges, more preferably a pair of beveled edges parallel to the above-mentioned protruding portion.

Essentially, the conductive plate according to the present invention comprises a thicker portion at least in proximity to the area of the at least one hole in the conductive plate.

In one aspect, the conductive plate has an internal face (or first face) and an external face (or second face).

In one aspect, the protruding portion extends on (that is, it emerges or protrudes from) said internal face and constitutes a central portion of the conductive plate, through which said hole passes, so as to define two lateral portions extending at the two sides of the central portion.

In one aspect, the conductive plate is formed integrally or as a single piece, that is, the central portion and the lateral portions are formed integrally with each other. In one aspect, the lateral portions lack a protrusion and in these lateral portions, the internal face is closer to the external face, with respect to the protruding central portion.

In one aspect, the lateral portions in the conductive plate are separated from each other by the central portion, that is, the central portion is interposed between, and connects, the lateral portions, along a direction consistent with the direction of connection of the conductor bars, in such a manner that from the side that receives the conductor bar to the opposite side that receives the next conductor bar to be connected, a lateral portion, the central portion and the other lateral portion meet in sequence.

In one aspect, the external face of the conductive plate, opposite the internal face, is preferably substantially flat or lacking protrusions.

In one aspect, the two lateral portions are substantially coplanar, whereas the central portion lies in a distinct plane parallel to the plane of the lateral portions owing to the protrusion.

In one aspect, the central portion of the plate - owing to the protruding portion - has a first thickness, and the two lateral portions have a second thickness (preferably constant for both lateral portions).

in one aspect, the first thickness is greater than the second thickness.

in one aspect, the first thickness is at least twice the second thickness.

In one aspect, the first thickness is greater than the second thickness by an amount that is at least equal to half the thickness of the conductor bars that the conductive plate is designed to receive and connect.

In one aspect, the increase in thickness determined by the protruding portion is such that the surface area of the vertical section of the conductive plate remains substantially constant in the lateral portions and in the central portion, despite the fact that the hole is found in the latter.

In one aspect, said first thickness of the protruding central portion, being greater than said second thickness of the lateral portions, is such that the surface area of the vertical section at the protruding central portion is equal to or greater (e.g. double or more) than the surface area of the vertical section at each lateral portion.

The vertical section makes it possible to observe the thickness of the plate at the lateral portions and at the central portion.

In one aspect, the thickness is calculated in a section of the plate orthogonal to the plane of extension of the same plate, that is, in a section that is orthogonal to the first and the second face.

Along its extension from one longitudinal end to the other, the conductive plate according to the present invention exhibits a cross section (or vertical-cross section) that has a substantially constant surface area, that is, a surface area that is not reduced at the central portion with respect to the lateral portions, or that has a surface area that is larger in the central portion with respect to the lateral portions. Essentially, in the conductive plate according to the present invention, the lack of material caused by the hole is at least compensated for (or more than compensated for) by the material added by the protrusion.

In one aspect, along a direction consistent with the direction of connection of the conductor bars, the protruding portion is of a width that is greater than or equal to the width of the hole, that is, the protruding portion extends laterally, that is, towards the lateral portions of the plate, from the two sides of the hole beyond the volume of the hole itself.

The first face of the conductive plate is intended to face, and be placed in contact with, the respective first face of an adjacent conductive plate, in such a manner that the two conductive plates prove to be electrically connected to each other and also electrically connected - in use - with the conductor bars that they connect (that is, the conductor bars intended to be inserted in the vacant spaces between the spaced lateral portions that face each other).

The present invention also makes available a junction block for electrically connecting busbars that comprises a plurality of conductive plates of the above-mentioned type and that are isolated from each other, packed between two side walls and through which at least one clamping bolt passes.

Preferably, in the above-mentioned junction block, the above-mentioned conductive plates are essentially arranged in pairs, in which, in each pair, the respective protruding portions are arranged one in front of the other.

Each pair of plates is designed to cooperate so as to realize the connection of two paired conductor bars, that is, bearing the same electrical line (or phase) in two consecutive busbars.

In the present invention, realizing a "junction" or "connecting" means physically and electrically connecting two conductor bars, in such a manner as to establish electrical continuity, that is, a flow of current between one conductor bar and the corresponding subsequent conductor bar (that is, of a subsequent module) along the busbar.

In the junction block, the conductive plates are preferably arranged laterally in succession according to an alternation comprising two internal faces facing each other, of a pair of matched conductive plates, and two external faces facing each other, of two plates belonging to different, subsequent pairs.

The above-mentioned junction block preferably comprises a plurality of partitioning elements, packed between the above-mentioned side walls and alternated with the above-mentioned conductive plates, alternated particularly with the above-mentioned pairs of conductive plates. The partitioning elements are typically made of electrically insulating material. The partitioning elements are preferably interposed between two adjacent pairs of conductive plates that face each other, in such a manner as to realize an alternation of one pair of conductive plates and one partitioning element, that is, in such a manner that each pair of conductive plates facing each other proves to be interposed between two subsequent partitioning elements.

Advantageously, conductive plates of the above-mentioned type, shaped with a thicker portion in the hole area, offer greater structural stability to the junction block according to the present invention, particularly by preventing undesirable bending of the conductive plates, and they also realize an improved electrical bridge with the conductor bars of two busbars to be connected electrically by means of the present junction block, minimizing overheating and the risk of short circuits, and increasing yield in terms of electrical conduction.

The two conductive plates of a pair of plates are arranged with the internal faces facing each other and the protruding portions in contact with each other, in such a manner that the lateral portions, which face each other, of the two plates prove to be spaced apart from each other (that is, they are widened with respect to the protruding portions), creating two vacant spaces, or compartments, shaped so as to receive by insertion the conductor bars to be connected.

In this manner, the conductor bars can be inserted axially in the spaces created by the pair of conductive plates until reaching the protruding portions of the two conductive plates, the protruding portions being, in contact with each other.

Preferably, the thickness of the protruding portion is substantially equal to half the thickness of the conductor bars which they are designed to connect.

Essentially, the thickness of the protruding portion is such that when two contiguous plates are positioned facing each other and in contact with each other in a junction block, two vacant spaces are created between them, the spaces being equal to the thickness of the conductor bars, so as to house them properly and place them in contact, laterally, with the faces of the pair of conductive plates from which the protruding portions project.

In general, the present invention comprises a thicker protruding portion, at the central hole in the conductive plate. By contrast, in the prior art, the conductive plates are bent in such a manner as to create a central portion that protrudes with respect to the lateral portions. In this manner, the central portions of two adjacent coupled conductive plates prove to be in contact with each other, whereas the lateral portions prove to be spaced apart so as to house a respective conductor bar. The plates according to the prior art exhibit a constant thickness, in both the protruding central portion and the lateral portions, and the shape is obtained by bending.

The solution found in the present invention, however, provides for a change in the thickness between the lateral portions and the protruding central portion, the latter being thicker, typically twice the thickness of the lateral portions or half the thickness of the bar to be housed and electrically connected (joined). The greater thickness is in the central portion, where the hole is found, and it makes it possible to compensate for the lack of material caused by the hole with new material obtained by increasing the thickness.

### Brief description of the figures

Further characteristics and advantages of the invention will prove to be clearer from an examination of the following detailed description of a preferred, but not exclusive, embodiment illustrated by way of approximate and non-limiting example, with the support of the attached drawings, of which:
- Figure 1 is a schematic top view of a junction block comprising a plurality of conductive plates for electrically connecting busbars, in accordance with the present invention.
- Figure 2 is a schematic perspective view of two conductive plates of the junction block appearing in Figure 1, with an enlarged detail thereof;
- Figure 3A schematically illustrates section 3A-3A of the conductive plate of Figure 2;
- Figure 3B schematically illustrates section 3B-3B of the conductive plate of Figure 2.

### Detailed description of the invention

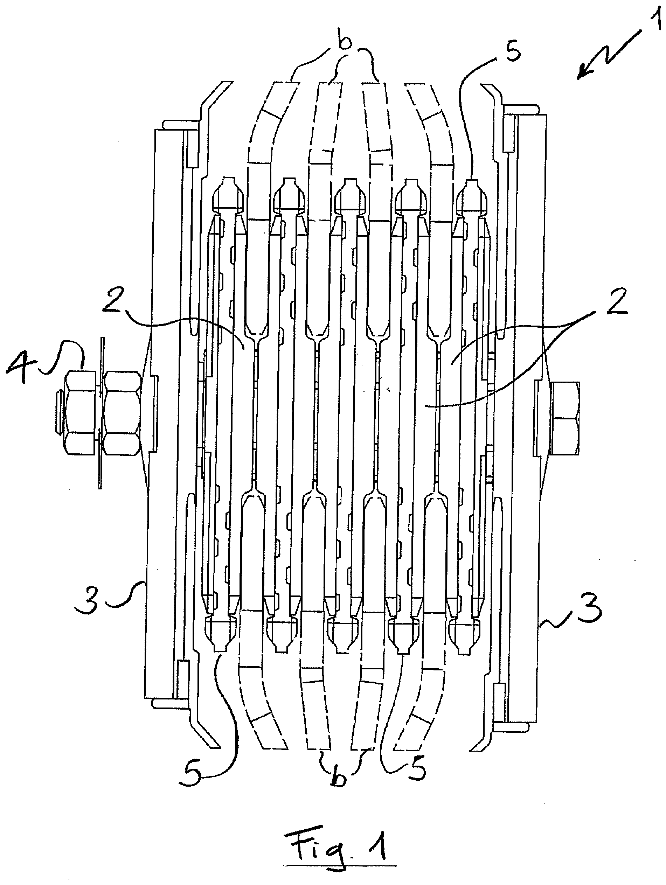

With reference to Figure 1, the number 1 indicates, in its entirety, a junction block for electrically connecting busbars of the type equipped with a plurality of conductive plates 2, in accordance with the present invention.

In particular, the junction block 1 also comprises two side walls 3, between which the conductive plates 2 are packed and isolated from each other, and a clamping bolt 4 that passes transversely in the block 1, and thus in the conductive plates 2 and the side walls 4, and it serves to clamp the conductive plates 2 together, without any clearance.

Moreover, in the use of the present junction block, that is, in electrically connecting the busbars, the clamping bolt 4 serves to ensure close contact between the conductive plates 2 and the conductor bars of two consecutive busbars.

In this regard, in the example appearing in Figure 1, the junction block 1 is shown clamped on conductor bars of two contiguous busbars, particularly with the conductive plates 2 interposed between the divergent ends of the conductor bars, which, in the above-mentioned figure, are indicated by the letter b and illustrated using a dashed line.

The junction block 1 further comprises a plurality of partitioning elements 5, which are also packed between the side walls 3 and alternating with the conductive plates 2, alternating particularly with pairs of conductive plates 2.

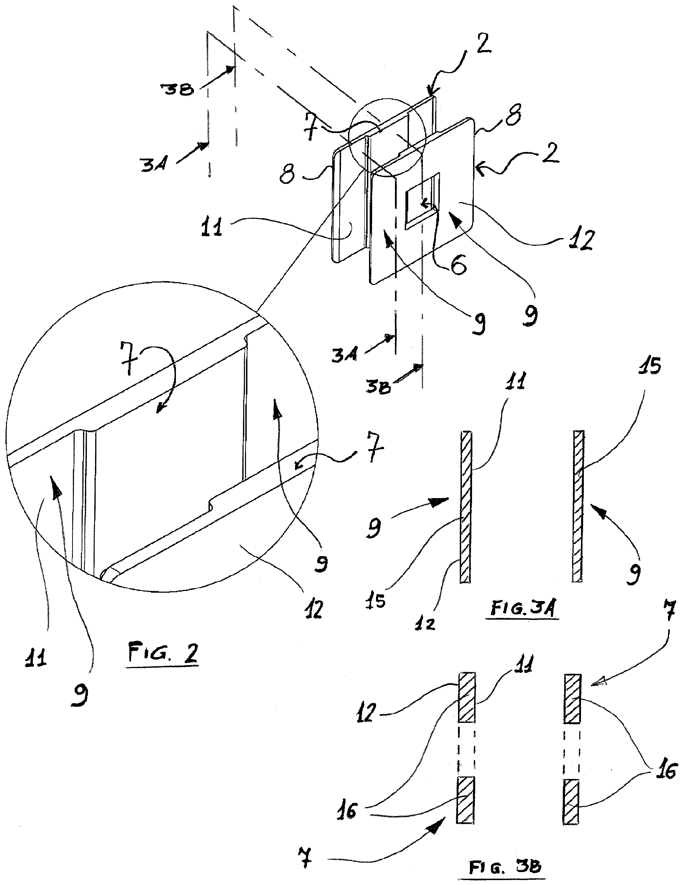

As specifically regards the conductive plates 2, which are shown in greater detail in the example appearing in Figure 2, it should be added that in accordance with the description hereinabove, they are perforated; more specifically, each one is provided with a centrally located through hole 6, which is engaged by the clamping bolt 4 and in accordance with the invention, each one of them comprises a protruding portion 7 on one face through which the hole 6 passes.

Basically, the protruding portion 7 of each conductive plate 2 is a thicker portion provided in the area of the hole 6.

In accordance with the invention, the protruding portion 7 is a strip or band fashioned integrally in the respective conductive plate 2, and thus a type of thicker strip extending through one end to the other of the conductive plate and thus from one edge to an opposite edge of the conductive plate, in a middle position.

Preferably, in each conductive plate 2, the width of the protruding portion 7 is greater than the respective hole 6, whereas at the same protruding portion 7, the thickness of each conductive plate 7 is about twice the thickness of the remaining portion of the same conductive plate.

Preferably, the thickness of the conductive plates 2 is therefore within the range of 5.5 mm to about 6.5 mm in the thicker portion of the conductive plates 2, thus at the protruding portion 7, and within the range of about 2.5 mm to about 3.5 mm in the remaining portion of the conductive plates 2, thus in the portions lateral to the protruding portion 7.

Therefore, the protruding portion 7 is of a height ranging between about 2 mm and about 4 mm, preferably within the range of about 2.5 mm to 3.5 mm.

Therefore, in accordance with the description provided hereinabove and according to a preferred embodiment, at the respective protruding portion 7 the thickness of each conductive plate 2 is about twice the thickness of the remaining portion of the conductive plate.

The conductive plate 2 preferably has an internal face 11 (or first face) and an external face 12 (or second face), as illustrated in the figures.

Preferably, the protruding portion 7 extends on (that is, it emerges or protrudes from) said internal face 11 and constitutes a central portion of the conductive plate, through which the hole 6 passes, so as to define two lateral portions 9 (or external portions) extending at the two sides of the central portion.

The conductive plate 2 is preferably formed integrally or as a single piece, that is, the central portion (with the protruding portion 7) and the lateral portions 9 are formed integrally with each other.

Preferably, the lateral portions lack a protrusion and in these lateral portions, the internal face 11 is closer to the external face 12, with respect to the protruding central portion.

Preferably, the lateral portions in the conductive plate are separated from each other by the central portion (on which the protruding portion is defined), that is, the central portion is interposed between, and connects, the lateral portions, along a direction consistent with the direction of connection of the conductor bars, in such a manner that from the side that receives the conductor bar to the opposite side that receives the next conductor bar to be connected, a lateral portion, the central portion and the other lateral portion meet in sequence.

The external face 12 of the conductive plate, opposite the internal face 11, is preferably substantially flat (that is, lacking protrusions).

Preferably, the two lateral portions 9 are substantially coplanar, whereas the central portion lies in a distinct plane parallel to the plane of the lateral portions owing to the protrusion.

Preferably, the central portion of the plate - owing to the protruding portion - has a first thickness, and the two lateral portions have a second thickness (preferably constant for both lateral portions).

Preferably, the first thickness is greater than the second thickness.

Preferably, the first thickness is at least twice the second thickness.

Preferably, the first thickness is greater than the second thickness by an amount that is at least equal to half the thickness of the conductor bars that the conductive plate is designed to receive and connect.

Preferably, the increase in thickness determined by the protruding portion (with the exception of the part affected by the hole 6) is such that the surface area of the vertical section of the conductive plate remains at least substantially constant between the lateral portions and the central portion, despite the fact that the hole is found in the latter; in other words, "passing through" the plate with a vertical section plane orthogonal to the faces, the surface area of the section obtained is substantially unchanged or it is greater in the protruding central portion and smaller in the lateral portions.

Preferably, the first thickness of the protruding central portion, being greater than the second thickness of the lateral portions, is such that the surface area of the vertical section at the protruding central portion is greater than (e.g. double or more) or equal to the surface area of the vertical section at each lateral portion.

A "vertical section" is to be understood as a cross section obtained through a vertical plane that is orthogonal to a main plane of extension of the conductive plate. The vertical section makes it possible to observe the thickness of the plate (that is, the amount of material) at the lateral portions and at the central portion.

Preferably, the thickness is calculated in a section of the plate orthogonal to the plane of extension of the same plate, that is, in a section that is orthogonal to be first and the second face.

Along its extension from one longitudinal end to the other, the conductive plate according to the present invention exhibits a cross section (or vertical-cross section) that has a substantially constant surface area, that is, a surface area that is not reduced at the central portion (where the hole is found) with respect to the lateral portions, or that has a surface area that is larger in the central portion (which exhibits the hole and the protrusion) with respect to the lateral portions. This means that the amount of material in the section is substantially constant between the lateral portions and the central portion (which exhibits the hole, but also the protrusion), or greater in the central portion. Essentially, in the conductive plate according to the present invention, the lack of material caused by the hole is at least compensated for (or more than compensated for) by the material added by the protrusion.

As is schematically shown in Figures 3A and 3B, the conductive plate has a first vertical section 15 at the lateral portions and a second section 16 at the central portion. The first section 15 has the form of a single rectangle, whereas the second section 16 is made up of - owing to the presence of the central hole - two separate rectangles (preferably identical, when the hole is vertically centred), which overall define the surface area of the section of the central portion.

According to the present invention, the two rectangles indicated by the number 16 and that constitute the surface area of the section of the central portion, have a surface area greater than or equal to the surface area of the rectangle 15 (obtained by sectioning each one of the two lateral portions).

Preferably, along a direction consistent with the direction of connection of the conductor bars, the protruding portion is of a width that is greater than or equal to the width of the hole, that is, the protruding portion extends laterally, that is, towards the lateral portions of the plate, from the two sides of the hole beyond the volume of the hole itself.

The plate preferably has an upper edge and a lower edge, and the protruding portion extends continuously between, and connects, the upper edge and the lower edge.

The upper edge and the lower edge are preferably vertically aligned and extend from a first side (which receives the first bar to be connected) to a second side (which receives the second bar to be connected), along the direction of connection of the two conductor bars.

The protruding portion is preferably a continuous strip extending from said upper edge to said lower edge. The first face of the conductive plate is intended to face, and be placed in contact with, the respective first face of an adjacent conductive plate, in such a manner that the two conductive plates prove to be electrically connected to each other and also electrically connected - in use - with the conductor bars that they connect (that is, the conductor bars intended to be inserted in the vacant spaces between the spaced lateral portions that face each other).

The conductive plates 2 in the junction block 1 are essentially arranged in pairs, and in each pair the respective protruding portions 7 are arranged one in front of the other, so that the remaining portions of the conductive plates, that is to say, the portions with a reduced thickness, are arranged opposite each other to realize, in turn, opposite housings for the conductor bars of the busbars, as can be seen in the example appearing in Figure 1.

In accordance with the invention, the conductive plates 2 are made of copper, aluminium or of a copper alloy or aluminium alloy.

Referring again to the conductive plates 2, it should be added that each one comprises beveled edges 8, particularly a pair of beveled edges 8 and specifically, the edges parallel to the protruding portion 7 are beveled.

The advantages of the present invention, already made apparent in the course of the description hereinabove, can be summarized by noting that a conductive plate for a junction block for connecting busbars is made available, in addition to a junction block for connecting busbars that comprises a plurality of these conductive plates and is capable of providing greater structural stability to the connection between busbars, as well as an improved electrical connection between the busbars, in terms of yield as regards electrical conduction owing to a more efficient electrical bridge, and in terms of overheating, short circuits and electrodynamic stress.

A person skilled in the art can introduce numerous changes and modifications to the present invention, in the embodiments illustrated and described, for the purpose of meeting contingent and specific needs, all of which, however, remaining within the scope of protection of the invention as defined by the following claims.

## Claims

1. A conductive plate (2) for a junction block for busbars, having a pair of faces opposite each other and at least one through hole (6) extending between said faces, wherein on one of said faces, it comprises a protruding portion (7) through which said at least one hole (6) passes, and wherein, at said protruding portion, the thickness of the plate is greater than the thickness of the remaining portion of said conductive plate, **characterized in that** said protruding portion (7) is a strip fashioned integrally in said conductive plate and extending in a middle position from one edge to an opposite edge of the conductive plate.

2. The conductive plate (2) according to claim 1, wherein the width of said protruding portion is greater than said at least one hole (6), and/or wherein, at said protruding portion, said thickness is about twice the thickness of the remaining portion of said conductive plate.

3. The conductive plate (2) according to any one of the preceding claims, wherein the conductive plate (2) has an internal face (11) and an external face (12), and wherein the protruding portion (7) extends on said internal face (11), and constitutes a central portion of the conductive plate, through which said hole (6) passes, so as to define two lateral portions (9) extending at the two sides of the central portion, and wherein said conductive plate (2) is formed integrally or as a single piece, that is, the central portion and the lateral portions are formed integrally with each other.

4. The conductive plate (2) according to claim 3, wherein the lateral portions are separated from each other by the central portion, that is, the central portion is interposed between, and connects, the lateral portions, along a direction consistent with the direction of connection of the conductor bars of the busbars, in such a manner that from the side that receives the conductor bar to the opposite side that receives the next conductor bar to be connected, a lateral portion, the central portion and the other lateral portion are met in sequence.

5. The conductive plate (2) according to claim 3 or 4, wherein the central portion of the plate - owing to the protruding portion (7) - has a first thickness, and the lateral portions have a second thickness, and wherein said first thickness is greater than said second thickness, and/or wherein said first thickness is at least twice said second thickness, and/or wherein the first thickness is greater than the second thickness by an amount that is at least equal to half the thickness of the conductor bars that the conductive plate is designed to receive and connect.

6. The conductive plate (2) according to claim 5, wherein said first thickness of the central portion, being greater than said second thickness of the lateral portions, is such that the surface area of the vertical section at the central portion, or at the protruding portion (7), is greater than or equal to the respective surface area of the vertical section at each lateral portion (9).

7. The conductive plate (2) according to any one of claims 3 to 6, exhibiting, along its extension from one longitudinal end to the other, a vertical section that has a substantially constant surface area, that is, a surface area that is not reduced at the central portion, or at the protruding portion, with respect to the lateral portions, or that has a surface area that is larger in the central portion with respect to the lateral portions.

8. The conductive plate according to any one of claims 3 to 7, wherein the amount of material in the section is substantially constant between the lateral portions and the central portion, which exhibits said hole and at the same time said protruding portion, or greater in the central portion, and/or wherein the lack of material in the conductive plate caused by said hole (6) is at least compensated for by the material added by said protruding portion (7).

9. The conductive plate (2) according to any one of claims 3 to 8, having a first vertical section (15) at the lateral portions (9) and a second vertical section (16) at the central portion, wherein said first section (15) has the form of a single rectangle, whereas the second section (16), owing to the presence of said hole, is made up of two separate rectangles, which overall define the surface area of the section of the central portion, and wherein the surface area of said second vertical section (16) is greater than or equal to the surface area of the first vertical section (15).

10. The conductive plate (2) according to any one of claims 3 to 9, wherein, along a direction consistent with the direction of connection of the conductor bars of the busbars, the protruding portion (7) is of a width that is greater than or equal to the width of the hole (6), and/or wherein the protruding portion extends laterally, that is, towards the lateral portions of the plate, from the two sides of the hole beyond the volume of the hole itself.

11. The conductive plate (2) according to any one of the preceding claims, having an upper edge and a lower edge, and wherein said protruding portion extends seamlessly between, and connects, the upper edge and the lower edge.

12. The conductive plate (2) according to any one of claims 3 to 11, wherein said internal face is intended to face, and be placed in contact with, the respective first face of an adjacent conductive plate, in such a manner that the two conductive plates prove to be electrically connected to each other and also electrically connected - in use - with the conductor bars to be connected, and/or wherein the conductive plate is made of copper, of aluminium, of a copper alloy or of an aluminium alloy, and/or wherein the conductive plate comprises a pair of beveled edges (8) substantially parallel to said protruding portion (7).

13. A junction block (1) for electrically connecting busbars and comprising a plurality of conductive plates (2) according to any one of the preceding claims, and further comprising two side walls (3) between which said conductive plates (2) are packed and isolated from each other, as well as a clamping bolt (4) that passes transversely through said junction block.

14. The junction block according to claim 13, wherein said conductive plates (2) are essentially arranged in pairs, wherein, in each pair, the respective protruding portions (7) are arranged one in front of the other, and/or wherein the junction block comprises a plurality of partitioning elements (5), packed between said side walls (3) and alternated with said pairs of conductive plates (2), and wherein each pair of conductive plates is designed to cooperate so as to realize the connection of two paired conductor bars, that is, bearing the same electrical line in two consecutive busbars.

15. The junction block according to claim 13 or 14, wherein the conductive plates are preferably arranged in succession according to an alternation comprising two internal faces facing each other, of a pair of matched conductive plates, and two external faces facing each other, of two plates belonging to different, subsequent pairs, and/or wherein the two conductive plates of a pair of plates are arranged with the internal faces facing each other and the protruding portions in contact with each other, in such a manner that the lateral portions, which face each other, of the two plates prove to be spaced apart from each other, creating two vacant spaces, or compartments, shaped so as to receive by insertion the conductor bars to be connected.

## Patentansprüche

1. Leitfähige Platte (2) für eine Anschlussleiste für Sammelschienen, welche ein Paar einander entgegengesetzter Flächen und wenigstens ein Durchgangsloch (6) aufweist, welches sich zwischen den Flächen erstreckt, wobei
sie an einer der Flächen einen vorstehenden Abschnitt (7) umfasst, durch welchen das wenigstens eine Loch (6) verläuft, und wobei die Dicke der Platte an dem vorstehenden Abschnitt größer ist als die Dicke des verbleibenden Abschnitts der leitfähigen Platte,
**dadurch gekennzeichnet, dass**
der vorstehende Abschnitt (7) ein Streifen ist, welcher integral in der leitfähigen Platte ausgebildet ist und sich in einer mittleren Position von einem Rand zu einem entgegengesetzten Rand der leitfähigen Platte erstreckt.

2. Leitfähige Platte (2) nach Anspruch 1, wobei die Breite des vorstehenden Abschnitts größer ist als das wenigstens eine Loch (6) und/oder wobei die Dicke an dem vorstehenden Abschnitt etwa das Doppelte der Dicke des verbleibenden Abschnitts der leitfähigen Platte ist.

3. Leitfähige Platte (2) nach einem der vorhergehenden Ansprüche, wobei die leitfähige Platte (2) eine innere Fläche (11) und eine äußere Fläche (12) aufweist und wobei sich der vorstehende Abschnitt (7) an der inneren Fläche (11) erstreckt und einen zentralen Abschnitt der leitfähigen Platte ausmacht, durch welchen das Loch (6) verläuft, um zwei laterale Abschnitte (9) zu definieren, welche sich an den zwei Seiten des zentralen Abschnitts erstrecken, und wobei die leitfähige Platte (2) integral oder als ein einzelnes Stück gebildet ist, das heißt, der zentrale Abschnitt und die lateralen Abschnitte integral miteinander gebildet sind.

4. Leitfähige Platte (2) nach Anspruch 3, wobei die lateralen Abschnitte durch den zentralen Abschnitt voneinander getrennt sind, das heißt, der zentrale Abschnitt in einer solchen Weise entlang einer Richtung, welche mit der Richtung einer Verbindung der Leiterschienen der Sammelschienen übereinstimmt, zwischen die lateralen Abschnitte eingefügt ist und sie verbindet, dass sich von der Seite, welche die Leiterschiene aufnimmt, zu der entgegengesetzten Seite, welche die nächste zu verbindende Leiterschiene aufnimmt, ein lateraler Abschnitt, der zentrale Abschnitt und der andere laterale Abschnitt nacheinander treffen.

5. Leitfähige Platte (2) nach Anspruch 3 oder 4, wobei der zentrale Abschnitt der Platte - aufgrund des vorstehenden Abschnitts (7) - eine erste Dicke aufweist und die lateralen Abschnitte eine zweite Dicke aufweisen und wobei die erste Dicke größer ist als die zweite Dicke und/oder wobei die erste Dicke wenigstens das Doppelte der zweiten Dicke ist und/oder wobei die erste Dicke um einen Betrag größer ist als die zweite Dicke, welcher wenigstens gleich der Hälfte der Dicke der Leiterschienen ist, welche die leitfähige Platte gestaltet ist, aufzunehmen und zu verbinden.

6. Leitfähige Platte (2) nach Anspruch 5, wobei die erste Dicke des zentralen Abschnitts, welche größer ist als die zweite Dicke der lateralen Abschnitte, derart ist, dass der Oberflächenbereich des vertikalen Teils an dem zentralen Abschnitt, oder an dem vorstehenden Abschnitt (7), größer ist als oder gleich ist wie der jeweilige Oberflächenbereich des vertikalen Teils an jedem lateralen Abschnitt (9).

7. Leitfähige Platte (2) nach einem der Ansprüche 3 bis 6, aufweisend entlang ihrer Erstreckung von einem longitudinalen Ende zu dem anderen einen vertikalen Teil, welcher einen im Wesentlichen konstanten Oberflächenbereich aufweist, das heißt, einen Oberflächenbereich, welcher an dem zentralen Abschnitt, oder an dem vorstehenden Abschnitt, in Bezug auf die lateralen Abschnitte nicht reduziert ist, oder welcher einen Oberflächenbereich aufweist, welcher in dem zentralen Abschnitt in Bezug auf die lateralen Abschnitte größer ist.

8. Leitfähige Platte nach einem der Ansprüche 3 bis 7, wobei die Menge an Material in dem Teil zwischen den lateralen Abschnitten und dem zentralen Abschnitt, welcher das Loch und zur gleichen Zeit den vorstehenden Abschnitt aufweist, im Wesentlichen konstant ist oder in dem zentralen Abschnitt größer ist und/oder wobei das durch das Loch (6) verursachte Fehlen von Material in der leitfähigen Platte durch das durch den vorstehenden Abschnitt (7) hinzugefügte Material wenigstens kompensiert wird.

9. Leitfähige Platte (2) nach einem der Ansprüche 3 bis 6, aufweisend einen ersten vertikalen Teil (15) an den lateralen Abschnitten (9) und einen zweiten vertikalen Teil (16) an dem zentralen Abschnitt, wobei der erste Teil (15) die Form eines einzelnen Rechtecks aufweist, wohingegen der zweite Teil (16), aufgrund des Vorliegens des Lochs, aus zwei separaten Rechtecken zusammengesetzt ist, welche insgesamt den Oberflächenbereich des Teils des zentralen Abschnitts definieren, und wobei der Oberflächenbereich des zweiten vertikalen Teils (16) größer ist als oder gleich ist wie der Oberflächenbereich des ersten vertikalen Teils (15).

10. Leitfähige Platte (2) nach einem der Ansprüche 3 bis 9, wobei, entlang einer Richtung, welche mit der Richtung einer Verbindung der Leiterschienen der Sammelschienen übereinstimmt, der vorstehende Abschnitt (7) eine Breite aufweist, welche größer ist als oder gleich ist wie die Breite des Lochs (6), und/oder wobei sich der vorstehende Abschnitt lateral, das heißt, in Richtung der lateralen Abschnitte der Platte, von den zwei Seiten des Lochs über das Volumen des Lochs selbst hinaus erstreckt.

11. Leitfähige Platte (2) nach einem der vorhergehenden Ansprüche, aufweisend einen oberen Rand und einen unteren Rand und wobei sich der vorstehende Abschnitt nahtlos zwischen dem oberen Rand und dem unteren Rand erstreckt und diese verbindet.

12. Leitfähige Platte (2) nach einem der Ansprüche 3 bis 11, wobei die innere Fläche dazu bestimmt ist, in einer solchen Weise der jeweiligen ersten Fläche einer benachbarten leitfähigen Platte zugewandt und in Kontakt damit platziert zu sein, dass sich die zwei leitfähigen Platten als miteinander elektrisch verbunden und - in Verwendung - auch als mit den zu verbindenden Leiterschienen elektrisch verbunden erweisen, und/oder wobei die leitfähige Patte aus Kupfer, aus Aluminium, aus einer Kupferlegierung oder aus einer Aluminiumlegierung hergestellt ist und/oder wobei die leitfähige Platte ein Paar abgeschrägter Ränder (8) umfasst, welche im Wesentlichen parallel zu dem vorstehenden Abschnitt (7) sind.

13. Anschlussleiste (1) zum elektrischen Verbinden von Sammelschienen und umfassend eine Mehrzahl leitfähiger Platten (2) nach einem der vorhergehenden Ansprüche und ferner umfassend zwei Seitenwände (3), zwischen welche die leitfähigen Platten gepackt und voneinander isoliert sind, wie auch einen Klemmbolzen (4), welcher transversal durch die Anschlussleiste verläuft.

14. Anschlussleiste nach Anspruch 13, wobei die leitfähigen Platten (2) im Wesentlichen in Paaren angeordnet sind, wobei bei jedem Paar die jeweiligen vorstehenden Abschnitte (7) einer vordem anderen angeordnet sind und/oder wobei die Anschlussleiste eine Mehrzahl von Trennelementen (5) umfasst, welche zwischen die Seitenwände (3) gepackt sind und sich mit den Paaren leitfähiger Platten (2) abwechseln, und wobei jedes Paar leitfähiger Platten gestaltet ist, um zusammenzuwirken, um die Verbindung zweier gepaarter Leiterschienen zu realisieren, das heißt, die gleiche elektrische Leitung in zwei aufeinanderfolgenden Sammelschienen zu tragen.

15. Anschlussleiste nach Anspruch 13 oder 14, wobei die leitfähigen Platten vorzugsweise in Folge gemäß einer Alternation angeordnet sind, umfassend zwei einander zugewandte innere Flächen eines Paars abgestimmter leitfähiger Platten und zwei einander zugewandte äußere Flächen zweier Platten, welche zu verschiedenen, nachfolgenden Platten gehören, und/oder wobei die zwei leitfähigen Platten eines Paars von Platten in einer solchen Weise mit den inneren Flächen einander zugewandt und den vorstehenden Abschnitten in Kontakt miteinander angeordnet sind, dass die lateralen Abschnitte, welche einander zugewandt sind, der zwei Platten sich als voneinander beabstandet erweisen, wodurch zwei freie Räume, oder Kammern, erzeugt werden, welche geformt sind, um durch ein Einsetzen die zu verbindenden Leiterschienen aufzunehmen.

## Revendications

1. Plaque conductrice (2) pour bloc de jonction pour barres omnibus, présentant une paire de faces opposées l'une à l'autre et au moins un trou traversant (6) s'étendant entre lesdites faces, où sur l'une desdites faces, elle comprend une portion faisant saillie (7) à travers laquelle ledit au moins un trou (6) passe, et où, au niveau de ladite portion faisant saillie, l'épaisseur de la plaque est supérieure à l'épaisseur de la portion restante de ladite plaque conductrice, **caractérisée en ce que** ladite portion faisant saillie (7) est une bande façonnée intégralement dans ladite plaque conductrice et s'étendant en une position médiane depuis un bord vers un bord opposé de la plaque conductrice.

2. Plaque conductrice (2) selon la revendication 1, dans laquelle la largeur de ladite portion faisant saillie est supérieure audit au moins un trou (6), et/ou où, au niveau de ladite portion faisant saillie, ladite épaisseur est environ le double de l'épaisseur de la portion restante de ladite plaque conductrice.

3. Plaque conductrice (2) selon l'une quelconque des revendications précédentes, dans laquelle la plaque conductrice (2) présente une face interne (11) et une face externe (12), et où la portion faisant saillie (7) s'étend sur ladite face interne (11), et constitue une portion centrale de la plaque conductrice, à travers laquelle ledit trou (6) passe, afin de définir deux portions latérales (9) s'étendant aux deux côtés de la portion centrale, et où ladite plaque conductrice (2) est formée intégralement ou en une pièce unique, c'est-à-dire, la portion centrale et les portions latérales sont formées intégralement l'une avec l'autre.

4. Plaque conductrice (2) selon la revendication 3, dans laquelle les portions latérales sont séparées l'une de l'autre par la portion centrale, c'est-à-dire, la portion centrale est interposée entre, et relie, les portions latérales, le long d'un sens cohérent avec le sens de connexion des barres conductrices des barres omnibus, d'une manière telle que depuis le côté qui reçoit la barre conductrice vers le côté opposé qui reçoit la barre conductrice suivante à connecter, une portion latérale, la portion centrale et l'autre portion latérale se rencontrent en séquence.

5. Plaque conductrice (2) selon la revendication 3 ou 4, dans laquelle la portion centrale de la plaque - dû à la portion faisant saillie (7) - présente une première épaisseur, et les portions latérales présentent une seconde épaisseur, et où ladite première épaisseur est supérieure à ladite seconde épaisseur, et/ou où ladite première épaisseur est au moins le double de ladite seconde épaisseur, et/ou où la première épaisseur est supérieure à la seconde épaisseur d'une quantité qui est au moins égale à la moitié de l'épaisseur des barres conductrices que la plaque conductrice est conçue pour recevoir et connecter.

6. Plaque conductrice (2) selon la revendication 5, dans laquelle ladite première épaisseur de la portion centrale, étant supérieure à ladite seconde épaisseur des portions latérales, est telle que la surface de la section verticale au niveau de la portion centrale, ou au niveau de la portion faisant saillie (7), est supérieure ou égale à la surface respective de la section verticale de chaque portion latérale (9).

7. Plaque conductrice (2) selon l'une quelconque des revendications 3 à 6, faisant preuve, le long de son extension depuis une extrémité longitudinale vers l'autre, d'une section verticale qui présente une surface sensiblement constante, c'est-à-dire, une surface qui n'est pas réduite au niveau de la portion centrale, ou au niveau de la portion faisant saillie, par rapport aux portions latérales, ou qui présente une surface qui est supérieure dans la portion centrale par rapport aux portions latérales.

8. Plaque conductrice selon l'une quelconque des revendications 3 à 7, dans laquelle la quantité de matière dans la section est sensiblement constante entre les portions latérales et la portion centrale, qui fait preuve dudit trou et en même temps ladite portion faisant saillie, ou supérieure dans la portion centrale, et/ou où le manque de matière dans la plaque conductrice provoqué par ledit trou (6) est au moins compensé par la matière ajoutée par ladite portion faisant saillie (7).

9. Plaque conductrice (2) selon l'une quelconque des revendications 3 à 8, présentant une première section verticale (15) aux portions latérales (9) et une seconde section verticale (16) à la portion centrale, où ladite première section (15) prend la forme d'un rectangle unique, tandis que la seconde section (16), dû à la présence dudit trou, est constituée de deux rectangles séparés, qui définissent globalement la surface de la section de la portion centrale, et où la surface de ladite seconde section verticale (16) est supérieure ou égale à la surface de la première section verticale (15).

10. Plaque conductrice (2) selon l'une quelconque des revendications 3 à 9, dans laquelle, le long d'un sens cohérent au sens de connexion des barres conductrices des barres omnibus, la portion faisant saillie (7) est d'une largeur qui est supérieure ou égale à la largeur du trou (6), et/ou où la portion faisant saillie s'étend latéralement, c'est-à-dire, vers les portions latérales de la plaque, depuis les deux côtés du trou au-delà du volume du trou lui-même.

11. Plaque conductrice (2) selon l'une quelconque des revendications précédentes, présentant un bord supérieur et un bord inférieur, et où ladite portion faisant saillie s'étend sans joint entre, et connecte, le bord supérieur et le bord inférieur.

12. Plaque conductrice (2) selon l'une quelconque des revendications 3 à 11, dans laquelle ladite face interne est prévue pour faire face, et être placée en contact avec, la première face respective d'une plaque conductrice adjacente, d'une manière telle que les deux plaques conductrices s'avèrent se trouver électriquement connectées l'une à l'autre et également électriquement connectées - durant l'utilisation - aux barres conductrices à connecter, et/ou la plaque conductrice étant constituée de cuivre, d'aluminium, d'un alliage de cuivre ou d'un alliage d'aluminium, et/ou où la plaque conductrice comprend une paire de bords biseautés (8) sensiblement parallèles à ladite portion faisant saillie (7).

13. Bloc de jonction (1) pour la connexion électriquement de barres omnibus et comprenant une pluralité de plaques conductrices (2) selon l'une quelconque des revendications précédentes, et comprenant en outre deux parois latérales (3) entre lesquelles lesdites plaques conductrices (2) sont assemblées et isolées l'une de l'autre, ainsi qu'un boulon de serrage (4) qui passe de manière transversale à travers ledit bloc de jonction.

14. Bloc de jonction selon la revendication 13, dans lequel lesdites plaques conductrices (2) sont essentiellement disposées par paires, où, dans chaque paire, les portions respectives faisant saillie (7) sont disposées l'une en face de l'autre, et/ou le bloc de jonction comprenant une pluralité d'éléments de partitionnement (5), assemblés entre lesdites parois latérales (3) et alternés avec lesdites paires de plaques conductrices (2), et où chaque paire de plaques conductrices est conçue pour coopérer afin de réaliser la connexion des deux barres conductrices appariées, c'est-à-dire, portant la même ligne électrique dans deux barres omnibus consécutives.

15. Bloc de jonction selon la revendication 13 ou 14, dans lequel les plaques conductrices sont préférablement disposées successivement selon une alternance comprenant deux faces internes faisant face l'une à l'autre, d'une paire de plaques conductrices qui correspondent, et deux faces externes faisant face l'une à l'autre, de deux plaques appartenant à des paires ultérieures, différentes, et/ou où les deux plaques conductrices d'une paire de plaques sont disposées avec les faces internes faisant face l'une à l'autre et les portions faisant saillie en contact l'une avec l'autre, d'une manière telle que les portions latérales, qui se font face l'une à l'autre, des deux plaques s'avèrent être écartées l'une de l'autre, créant deux espaces vacants, ou compartiments, façonnés afin de recevoir par insertion les barres conductrices à connecter.
